# EUROPEAN PATENT SPECIFICATION

(11) **EP 0 863 048 B1**
(45) Date of publication and mention of the grant of the patent: **22.01.2003**
(21) Application number: 98200583.7
(22) Date of filing: 24.02.1998
(51) Int. Cl.: B60Q 1/26

(54) **Mounting bracket for supporting a light on the body of a vehicle**
Haltebügel zur Befestigung einer Leuchte auf der Kraftfahrzeugkarosserie
Support de fixation pour le montage d'un feu sur la carrosserie d'un véhicule

(30) Priority: 07.03.1997 IT TO970189
(43) Date of publication of application: 09.09.1998
(73) Proprietor: CNH Italia S.p.A., 41100 Modena (IT)
(72) Inventor: La Vecchia, Guido, 40137 Bologna (IT); Sileo, Gaetano, Casalecchio di Reno (Bologna) (IT)
(74) Representative: Vandenbroucke, Alberic

(56) References cited:
- DE-A- 3 703 095
- US-A- 3 629 569

## Description

The present invention relates to a mounting bracket for supporting a light on the body of a vehicle and is particularly intended for a tractor or the like off-road vehicle.

The brackets used to mount lights on a tractor face conflicting requirements. To avoid the lights vibrating during use, the brackets need to be stiff. For this reason, solid metal brackets are often used for this purpose. On the other hand, to avoid damage to the lights and the brackets in the event of their colliding with an object during use, the brackets need to be resiliently deflectable.

A resiliently deflectable bracket is known from US-A-3.629.569. The bracket is made of a rubber material and is formed as a hollow tube tapering from one end to the other. Due to the shape of the bracket, bending in any direction is possible. The bracket therefore will behave similarly in absorbing vertically and horizontally induced vibrations. A similar bracket is also described in DE-A-3.703.095. Both documents disclose a mounting bracket according to the preamble of claim 1.

In accordance with the present invention, there is provided a mounting bracket for supporting a light on the body of a vehicle; the bracket comprising an arm which is formed of a plastics material and is formed integrally with, and extends between, a mounting plate, to be secured to the body of the vehicle, and a housing for receiving the light.

The bracket is characterized in that the arm comprises two horizontally spaced struts each extending from the mounting plate to the light housing and each strut having a height which is greater than its depth, whereby the arm is sufficiently rigid to support the light without vibrating in a vertical plane but is resiliently deflectable in a horizontal plane to be able to withstand collision with an obstruction without breaking.

Though the resistance or stiffness of the arm in a horizontal plane may be the same in both directions, it is preferred for the two struts of the arm to be curved in the horizontal plane and to be so dimensioned in relation to one another that the resistance to bending is greater in one direction than in the other.

Advantageously, at least one of the struts is formed with an inner bore extending the length of the arm from the mounting plate to the light housing for guiding and protecting cables supplying electrical power to the light mounted in the housing.

The mounting bracket may conveniently be formed as a one piece moulding of a plastics material. Captive metal inserts are preferably moulded in situ in the mounting plate and the light housing to serve as fastenings for securing the support bracket to the vehicle body and retaining the light in the light housing.

The bracket of the preferred embodiment of the invention may be injection moulded as both the space between the struts of the arm and the bore within one of the struts may be formed by the use of mandrels retractably mounted in the mould. It is preferred, however, to use a cavity moulding technique. During cavity moulding, a quantity of plastics material insufficient to fill a mould is introduced into the mould and rolled around the mould while it sets so that it only coats the walls of the mould, leaving one or more cavities within the moulded article. This technique is well known per se and used for example in forming one piece hollow articles such as plastic fuel tanks for motor vehicles.

The invention will now be described further, by way of example, with reference to the accompanying drawings, in which :
Figure 1 is a plan view from above of a mounting bracket of the invention,
Figure 2 is a front view of the bracket shown in Figure 1, and
Figure 3 is a section taken along the line III-III in Figure 2.

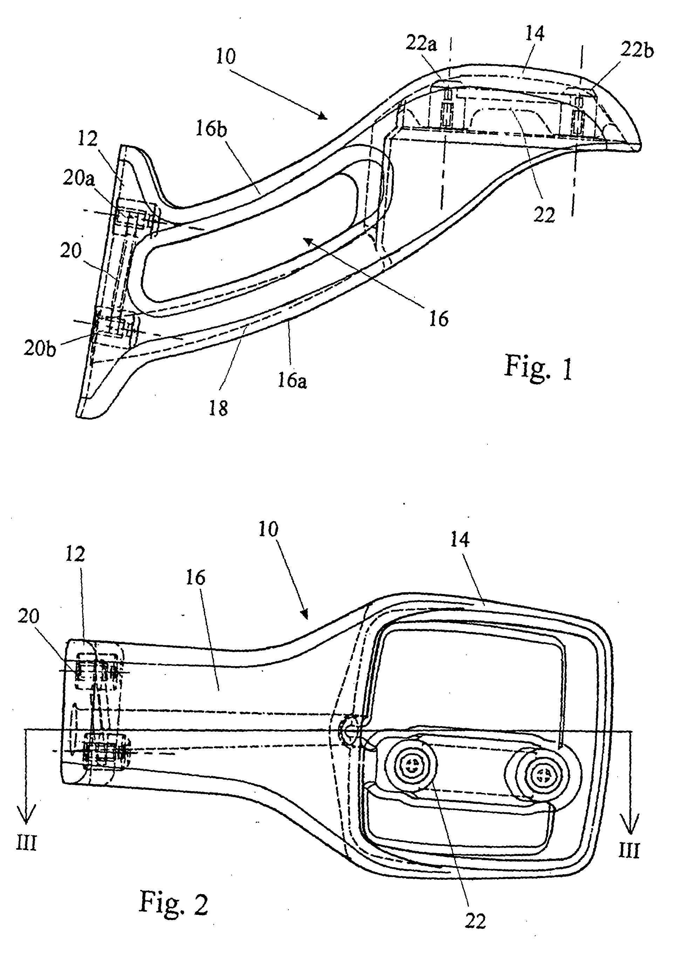

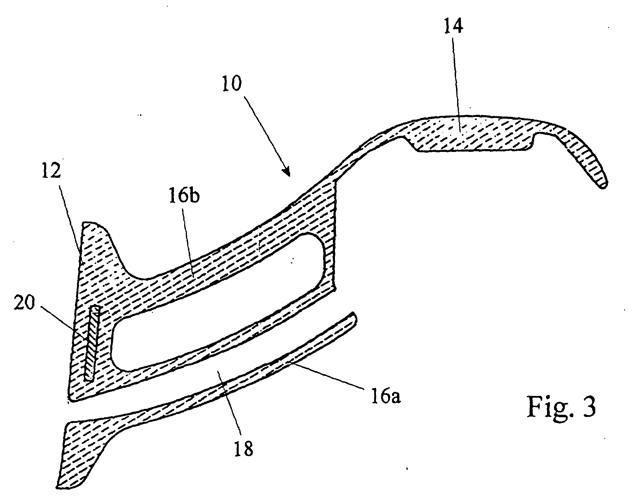

The mounting bracket 10 shown in the drawings comprises a mounting plate 12, a light housing 14 and an arm 16 extending from the mounting plate 12 to the light housing 14. The arm 16 is formed of two horizontally spaced struts 16a and 16b. As shown in Figures 1 and 3, the struts 16a and 16b are not of equal length, the front strut 16a being the longer of the two. Furthermore, both the struts 16a and 16b are curved in the same sense when viewed in plan.

The front strut 16a is also formed with a bore 18 that extends over its entire length from the mounting plate 12 to the light housing 14. The bore 18 serves to guide and protect the electrical power leads to the light retained within the light housing 14.

A first metal insert 20 moulded in situ as part of the mounting plate 12 defines two internally screw threaded nuts 20a and 20b that enable the bracket 10 to be bolted on to the body of a vehicle. A second metal insert 22 moulded in situ as part of the light housing 14 defines two internally screw threaded nuts 22a and 22b that enable the light to be bolted into the light housing 14.

The entire mounting bracket 10 is moulded in one piece from a plastics material, such as a polycarbonate or polypropylene, by a cavity moulding process, the inserts 20 and 22 being placed in the mould prior to the introduction of the plastics material into the mould so that the inserts are captive in the plastics material when it sets.

Because of the space between the struts 16a and 16b and the curvature of these two struts, they will bend if the bracket 10 collides with an object while the vehicle is moving forward but they will offer greater resistance to movement in the opposite horizontal direction. Also because the height of the struts, as seen from Figure 2, exceeds their width in the horizontal plane, they offer more resistance to flexing in a vertical plane. The flexibility of the arm in a horizontal plane allows it to absorb collision shocks without breaking and yet to support the light firmly without vibrating when the vehicle is being driven, even in off-road conditions.

## Claims

1. A mounting bracket (10) for supporting a light on the body of a vehicle; the bracket (10) comprising an arm (16) which is formed of a plastics material and is formed integrally with, and extends between, a mounting plate (12), to be secured to the body of the vehicle, and a housing (14) for receiving the light; and
**characterized in that** the arm (16) comprises two horizontally spaced struts (16a, 16b) each extending from the mounting plate (12) to the light housing (14) and each strut (16a, 16b) having a height which is greater than its depth, whereby the arm (16) is sufficiently rigid to support the light without vibrating in a vertical plane but is resiliently deflectable in a horizontal plane to be able to withstand collision with an obstruction without breaking.

2. A mounting bracket according to claim 1, **characterized in that** the two struts (16a, 16b) of the arm (16) are curved in the horizontal plane and the front strut (16a) is longer than the other strut (16b), whereby the resistance of the arm (16) to bending in the horizontal plane is greater in one direction than in the other.

3. A mounting bracket according to claim 1 or 2, **characterized in that** at least one of the struts (16a, 16b) is formed with an inner bore (18) extending the length of the arm (16) from the mounting plate (12) to the light housing (14), for guiding and protecting cables supplying electrical power to the light mounted in the housing (14).

4. A mounting bracket according to any of the preceding claims, **characterized in that** the bracket is formed as a one piece moulding of a plastics material.

5. A mounting bracket according to claim 4, **characterized in that** captive metal inserts (20, 22) are moulded in situ in the mounting plate (12) and the light housing (14) to serve as fastenings for securing the support bracket (10) to the vehicle body and retaining the light in the light housing (14).

6. A mounting bracket according to claim 4 or 5, **characterized in that** the bracket (10) is injection moulded.

7. A mounting bracket according to claim 4 or 5, **characterized in that** the bracket (10) is moulded using a cavity moulding technique.

## Patentansprüche

1. Haltebügel (10) zur Befestigung einer Leuchte an der Karosserie eines Fahrzeugs, wobei der Haltebügel (10) einen Arm (16) umfaßt, der aus Kunststoffmaterial geformt ist und der einstückig mit einer an der Karosserie des Fahrzeugs zu befestigenden Befestigungsplatte (12) und einem Gehäuse (14) zur Aufnahme der Leuchte ausgeformt ist und sich zwischen diesen Teilen erstreckt,
**dadurch gekennzeichnet, daß** der Arm (16) zwei mit horizontalem Abstand angeordnete Streben (16a, 16b) umfaßt, die sich jeweils von der Befestigungsplatte (12) zum Lampengehäuse (14) erstrecken, und daß jede Strebe (16a, 16b) eine Höhe aufweist, die größer als ihre Tiefe ist, wodurch der Arm (16) ausreichend starr ist, um die Leuchte ohne Schwingungen in einer vertikalen Ebene zu haltern, jedoch in einer horizontalen Ebene ausreichend elastisch auslenkbar ist, um einem Zusammenstoß mit einem Hindernis ohne Brechen zu widerstehen.

2. Haltebügel nach Anspruch 1, **dadurch gekennzeichnet, daß** die beiden Streben (16a, 16b) des Arms (16) in der horizontalen Ebene gekrümmt sind, und daß die vordere Strebe (16a) länger als die andere Strebe (16b) ist, so daß der Widerstand des Arms (16) gegen eine Biegung in der horizontalen Richtung in einer Richtung größer als in der anderen Richtung ist.

3. Haltebügel nach Anspruch 1 oder 2, **dadurch gekennzeichnet, daß** zumindest eine der Streben (16a, 16b) mit einer innenliegenden Bohrung (18) ausgeformt ist, die sich über die Länge des Arms (16) von der Befestigungsplatte (12) zum Leuchtengehäuse (14) erstreckt, um Kabel, die elektrische Leistung an die in dem Gehäuse (14) befestigte Leuchte liefern, zu führen und zu schützen.

4. Haltebügel nach einem der vorhergehenden Ansprüche, **dadurch gekennzeichnet, daß** der Haltebügel als ein einstückiges Formstück aus einem Kunststoffmaterial geformt ist.

5. Haltebügel nach Anspruch 4, **dadurch gekennzeichnet, daß** eingeformte Metalleinsätze (20, 22) an Ort und Stelle in der Befestigungsplatte (12) und in dem Leuchtengehäuse (14) eingeformt sind, um als Befestigungsmittel zur Befestigung des Haltebügels (10) an der Fahrzeug-Karosserie und zum Festhalten der Leuchte in dem Lampengehäuse (14) zu dienen.

6. Haltebügel nach Anspruch 4 oder 5, **dadurch gekennzeichnet, daß** der Haltebügel (10) durch Spritzgießen geformt ist.

7. Haltebügel nach Anspruch 4 oder 5, **dadurch gekennzeichnet, daß** der Haltebügel (10) unter Verwendung einer Hohlformtechnik geformt ist.

## Revendications

1. Support de fixation (10) pour fixer un feu sur la carrosserie d'un véhicule ; le support (10) comprenant un bras qui est fabriqué à partir de matière plastique et qui fait partie intégrante avec et s'étend entre une plaque de fixation (12) devant être fixée à la carrosserie du véhicule et un logement (14) destiné à accueillir le feu;
**caractérisé en ce que** le bras (16) comprend deux barres (16a, 16b) espacées selon la direction horizontale s'étendant chacune entre la plaque de fixation (12) et le logement de feu (14) et chaque barre (16a, 16b) ayant une hauteur supérieure à sa profondeur, de sorte que le bras (16) soit suffisamment rigide pour supporter le feu sans vibrer dans un plan vertical mais qu'il soit élastiquement déformable dans un plan horizontal pour pouvoir supporter une collision avec un obstacle sans se rompre.

2. Support de fixation suivant la revendication 1, **caractérisé en ce que** les deux barres (16a, 16b) du bras (16) sont incurvées dans le plan horizontal et **en ce que** la barre avant (16a) est plus longue que l'autre barre (16b), de sorte que la résistance du bras (16) à la flexion dans le plan horizontal est plus élevée dans une direction que dans l'autre.

3. Support de fixation suivant la revendication 1 ou 2, **caractérisé en ce qu'**au moins une des barres (16a, 16b) comporte un alésage intérieur (18) s'étendant sur toute la longueur du bras (16) entre la plaque de fixation (12) et le logement de feu (14), afin de guider et de protéger les câbles alimentant en énergie électrique le feu maintenu dans le logement (14).

4. Support de fixation suivant l'une quelconque des revendications précédentes, **caractérisé en ce que** le support est réalisé sous la forme d'un élément moulé en une seule pièce à partir de matière plastique.

5. Support de fixation suivant la revendication 4, **caractérisé en ce que** des inserts métalliques captifs (20, 22) sont moulés en place dans la plaque de fixation (12) et dans le logement de feu (14) afin de servir de moyens de fixation pour accrocher le support de fixation (10) à la carrosserie du véhicule et pour maintenir le feu dans le logement de feu (14).

6. Support de fixation suivant la revendication 4 ou 5, **caractérisé en ce que** le support (10) est moulé par injection.

7. Support de fixation suivant la revendication 4 ou 5, **caractérisé en ce que** le support (10) est moulé en utilisant une technique de rotomoulage.
